# EUROPEAN PATENT SPECIFICATION

(11) **EP 4 391 496 B1**
(45) Date of publication and mention of the grant of the patent: **13.05.2026**
(21) Application number: 22216356.0
(22) Date of filing: 23.12.2022
(51) Int. Cl.: H04L 69/12, H04L 69/321, G06F 9/50, H04L 43/0811, H04L 43/20, G06F 9/4401

(54) **NETWORKING CONTROL ENGINE EMBEDDED IN A PLATFORM**
IN EINE PLATTFORM EINGEBETTETE VERNETZUNGSSTEUERUNGSMASCHINE
MOTEUR DE COMMANDE DE MISE EN RÉSEAU INTÉGRÉ DANS UNE PLATEFORME

(43) Date of publication of application: 26.06.2024
(73) Proprietor: INTEL Corporation, Santa Clara, CA 95054 (US)
(72) Inventor: IDAN, Nevo, 3094042 Zichron Ya'akov (IL); HAMAMI, Ilan, 4060515 Tel Mond (IL); RESHEF, Ehud, 36551 Qiryat Tivon (IL); HAREUVENI, Ofer, 26302 Haifa (IL); SHUSTERMAN, Michael, Portland, 97229 (US)
(74) Representative: 2SPL Patentanwälte PartG mbB

(56) References cited:
- US-A1- 2018 004 693
- US-A1- 2019 042 755
- US-A1- 2020 142 683
- US-A1- 2021 173 701
- SHANTHARAMA PRATEEK ET AL: "Hardware-Accelerated Platforms and Infrastructures for Network Functions: A Survey of Enabling Technologies and Research Studies", IEEE ACCESS, IEEE, USA, vol. 8, 9 July 2020 (2020-07-09), pages 132021 - 132085, XP011800789, DOI: 10.1109/ACCESS.2020.3008250
- TAKATA M ET AL: "The Glue Logic: An Integrated Pro- gramming/Execution Environment for Distributed Manufacturing Work-Cell Control System for Manufacturing Springer Science+Business Media Dordrecht 1997 182 Part Three Integration Frameworks and Architectures", 1 January 1996 (1996-01-01), XP093045491, Retrieved from the Internet <URL:https://link.springer.com/content/pdf/10.1007/978-0-387-35063-9_16.pdf?pdf=inline%20link> [retrieved on 20230509]

## Description

### Background

Analyzing future trends, the location of intellectual property work will diversify. Advancing work will drive innovations in infrastructure that enable secure and seamless connection to enterprise networks regardless of where the user is. People will be experimenting with personalized assistants that will make the creation process much easier. Personal computing will undergo reframing in both form factors and definition, connecting various other multiple connected devices.

These days, computing may rely on connectivity and cloud services, and the quality of user experience, power-performance tradeoffs, and security may depend on platform architecture and infrastructure for best-in-class operations. Conventional solutions rely on operation system (OS) or host software (SW) level support for connection management and data transfer control. Such solutions depend on the OS and SW efficiency (performance, power, etc.) and availability.

The networking flows, involving host OS/SW for data transfer creation and shaping, suffer from power and performance loss relative to hardware (HW)/embedded solutions. Latency impact may be tens of milli-seconds for display rendering with additional power impact hundreds of milli-watts. Additionally, OS and SW reliability and security might become a weak link when considering the networking services premise for service continuity and cybersecurity.

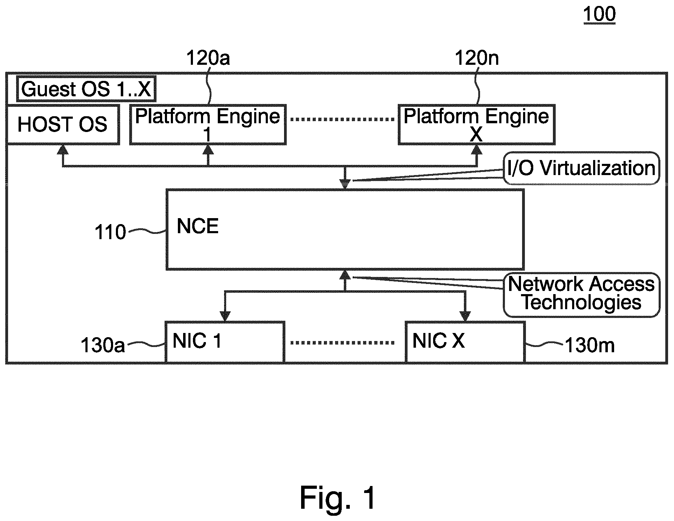

Shantharama Prateek et al., "Hardware-Accelerated Platforms and Infrastructures for Network Functions: A Survey of Enabling Technologies and Research Studies", IEEE ACCESS, IEEE, USA, vol. 8, 9 July 2020, pages 132021 -1 32085, XP011800789, discloses that in order to facilitate flexible network service virtualization and migration, network functions (NFs) are increasingly executed by software modules (softwarized NFs) on general purpose computing (GPC) platforms. Shantharama Prateek et al. discloses that traditionally, the term "network function (NF)" applied primarily to functions of the lower network protocol layers, and these low-level NFs were usually executed in specially designed dedicated networking equipment, such as switches, routers, and gateways. Shantharama Prateek et al. discloses that the area of networking moves towards implementing NFs as software entities on GPC platforms. FIG. 1 shows GPC platform hardware to process the softwarized NFs.

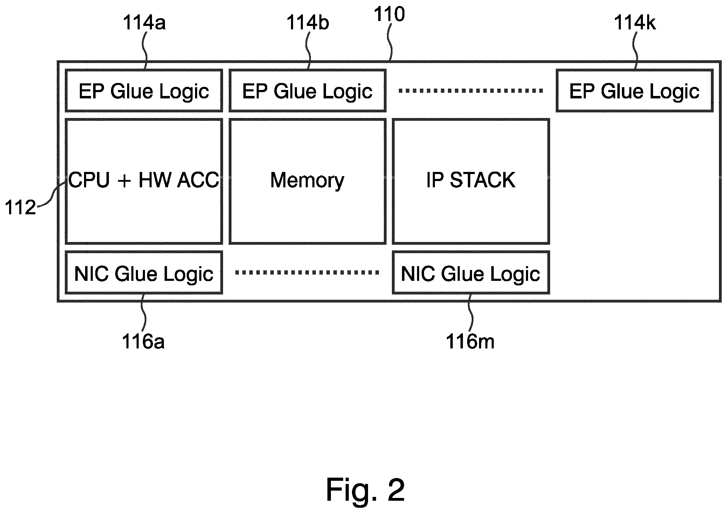

US 2020/0142683 relates to a software update system. US 2020/0142683 discloses that an Information Handling System (IHS) includes a Baseboard Management Controller (BMC) that is coupled to an OS-to-BMC interface, wherein the BMC is configured to identify OS software update, transmit the OS software updates through the OS-to-BMC interface, and provide the component software updates for a plurality of components. FIG. 2 shows the software update system that provides for the updating of server component firmware, operating system drivers, operating system applications, or other software.

US 2019/0042755 relates to information handling systems. US 2019/0042755 discloses that the information handling system can be divided into a host portion and an operating system portion. The host portion of the information handling system includes a service processor and a BIOS. The OS portion of the information handling system includes operating system, a memory, a network interface card, a central processing unit, and a disk.

### Brief description of the Figures

Some examples of apparatuses and/or methods will be described in the following by way of example only, and with reference to the accompanying figures, in which
FIG. 1 shows an example system including a networking control entity (NCE) in accordance with one example;
FIG. 2 shows an example architecture of an NCE;
FIG. 3A shows an example scenario for wireless display offloading;
FIG. 3B shows an example process of video/audio transmission for playing on a display/speaker.
FIG. 3C shows an example processing by the NCE for the wireless display offloading;
FIG. 4A shows an example scenario for audio streaming offloading;
FIG. 4B shows an example for audio streaming offloading to a remote wireless speaker;
FIG. 5 shows an example scenario for tethering;
FIG. 6 shows an example scenario that the NCE is configured to perform traffic monitoring;
FIG. 7 shows an example scenario that the NCE is configured to perform traffic management;
FIG. 8 shows an example scenario that the platform includes a sensor hub;
FIG. 9 shows an architecture of hypervisor;
FIG. 10 illustrates a user device in which the examples disclosed herein may be implemented; and
FIG. 11 illustrates a base station or infrastructure equipment radio head in which the examples disclosed herein may be implemented.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the invention, which is defined by the appended claims. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

Examples are disclosed for a networking control engine embedded in a platform. The examples disclosed hereinafter provide a platform-internal, OS-agnostic framework that provides the foundation for platform flows related to, for example, cloud and networking-based solutions for improved latency, power, security, and the like.

In examples, a new entity (hereafter referred to as a networking control entity (NCE)) is included in a platform. The NCE delivers high performance, low latency, low power, and secure connectivity (e.g., a data path) and capabilities (e.g., sensing, wireless display or audio streaming, tethering, traffic monitoring, networking services, etc.) to the hosting OS and hosted virtual machines (VMs) on the platform and to the platform internal hardware (HW) engines.

The NCE is a platform connectivity engine that contains computation logic, buffers, accelerators, etc. to support networking flows (connectivity and data transfer) below OS level. The NCE controls multiple logical network interfaces for services, an OS, and platform engines while abstracting the network access technologies used in runtime. The NCE provides network interfaces toward the OS and the platform engines and manages the connectivity and data transfer internally. The NCE abstracts the networking details from the user(s). The NCE provides efficient (in terms of latency and power consumption) data transfer and robust connection management.

The NCE may manage activities while the platform is in a sleep state. Numerous activities/functions may be offloaded from the OS to the NCE. This can improve the performance of the system. The latency of processing in the OS can be saved since the SW/HW accelerators included in the NCE can perform the processing more efficiently. The main CPU requirements and memory activities can also be reduced by offloading the tasks to the NCE. The NCE may include only the network connectivity (e.g., OSI layers 2-4 processing) and data transfer control and management capabilities. The NCE is a much smaller device with much less functionalities than the main CPU/processing core(s) and the OS in the platform. This can save power consumption of the system. Alternatively, the NCE may include additional functionalities, such as network interface card (NIC) power state management and/or scheduling for networking and non-networking-related activities in the platform based on the aggregate networking and non-networking requests from the host OS and guest OS in the device/platform. The NCE provides a single virtual network interface to the OS while abstracting the details of the underlying networking interfaces. While the NCE provides the network interface to the OS, the details of the network connection may be hidden from the OS. The NCE may be configured to provide contextual information received from a sensor to clients on the platform. The contextual information may include location information based on received signal strength measurements, high accuracy ranging information, and/or channel sounding-based environmental sensing information. The NCE may be configured to select a NIC among a plurality of NICs for a required operation, perform NOC power state management, and/or configure a NIC(s) to execute required activities.

FIG. 1 shows an example system 100 (i.e., a platform) including an NCE 110 in accordance with one example. The system 100 may be included in a user equipment, such as a personal computer, a laptop computer, a desktop computer, a tablet computer, a mobile phone, a smart phone, or any computing device. A platform includes a processor(s), a memory, an input/output (I/O) subsystem, a bus interface, and other hardware devices, circuitries, components, and an operating system that applications, programs, or processes run upon. The system 100 includes one or more platform engines 120a-120n (hardware engines/accelerators). Each platform engine 120a-120n is configured for dedicated processing. For example, the platform engines 120a-120n may be a video engine or audio engine for video or audio processing, a three-dimensional (3D) accelerator for 3D graphics processing, a cryptographic accelerator for cryptographic processing, or any other hardware accelerator. The NCE 110 is a hardware module provided in the system 100 for network connectivity (e.g., OSI layer 2-4 processing) and data transfer control and management. The NCE 110 may include additional functionalities such as NIC power state management and scheduling of networking and/or non-networking-related activities based on the aggregate networking and non-networking requests from the host OS and guest OS on the device. The system 100 also includes one or more NICs 130a-130m for wireless or wired transmission and reception under different network access technologies.

The NCE 110 controls/provides a connection (a many-to-many connection) between multiple clients (i.e., the OS and platform engines 120a-120n in the platform) and multiple networking interfaces (i.e., NICs 130a-130m). Once configured by the OS, the NCE 110 may provide a direct connection between a platform engine 120a-120n and a NIC 130a-130m without management by the OS.

The NCE 110 supports I/O virtualization while abstracting the networking details from the users (e.g., the OS and the platform engines 120a-120n). The NCE 110 controls/provides a logical network interface for the OS and the platform engines 120a-120n while abstracting the network access technologies. The NCE 110 provides a single virtual network interface to the OS while abstracting the details of the underlying networking interfaces. While the NCE 110 provides the network interface to the OS, the details of the network connection may be hidden from the OS. The NCE 110 may autonomously handover between network interfaces, which can be transparent to the OS.

Input/output (I/O) virtualization is a technique to simplify management, lower costs, and improve performance of servers in enterprise environments. I/O virtualization environments are created by abstracting the upper layer protocols from the physical connections. I/O virtualization interface allows a device, such as a network adapter, to separate access to its resources among various hardware functions. These functions include a physical function (PF) and one or more virtual functions (VFs). A PF is the primary function of the device and advertises the device's I/O virtualization capabilities. The PF is associated with the hypervisor parent partition in a virtualized environment. A VF shares one or more physical resources of the device, such as a memory and a network port, with the PF and other VFs on the device. Each VF is associated with a Hyper-V child partition in a virtualized environment.

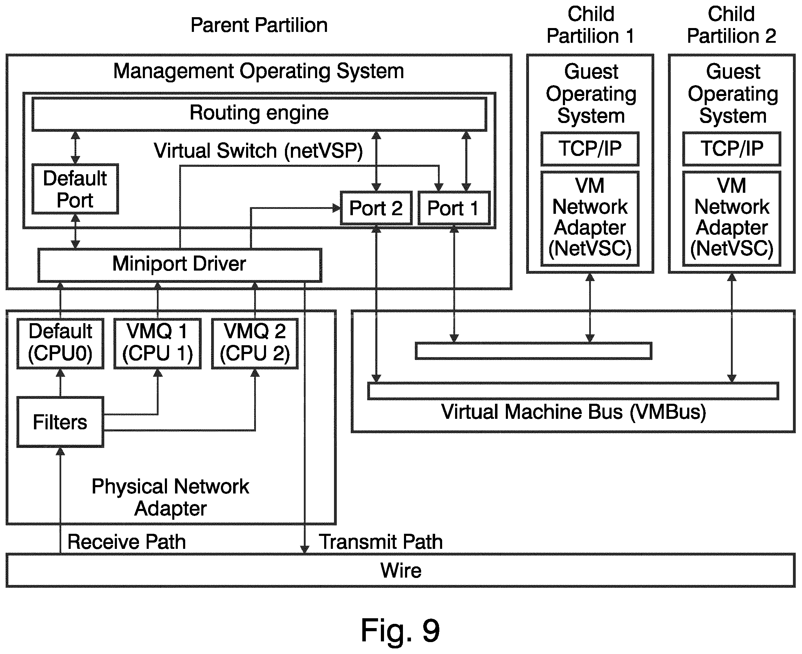

FIG. 9 shows an architecture of hypervisor (Hyper-V). Hyper-V is the processor-specific virtualization platform that allows multiple isolated operating systems to share a single hardware platform. Hyper-V implements isolation of virtual machines in terms of a partition. A partition is a logical unit of isolation, supported by the hypervisor, in which each guest operating system executes. There must be at least one parent partition in a hypervisor instance. The virtualization software runs in the parent partition and has direct access to the hardware devices. The parent partition creates child partitions which host the guest OSs, using the hypercall application programming interface (API), which is the application programming interface exposed by Hyper-V. The virtualization stack runs in the management operating system of the Hyper-V parent partition and has direct access to the hardware devices.

FIG. 2 shows an example architecture of an NCE 110. The NCE 110 includes an execution core 112 including a central processing unit (CPU), a graphics processing unit (GPU), and/or HW accelerators, etc. The HW accelerator is hardware circuitry designed to perform specific functions. For example, the execution core 112 may include a cryptographic accelerator for cryptographic processing, a packet processor for packet processing, a 3D accelerator for 3D graphics processing, or any hardware accelerators.

The execution core 112 is configured for packet processing, networking protocol stack processing, or the like. The NCE 110 (i.e., the execution core 112) may be configured for Open Systems Interconnection (OSI) layer 2-4 processing. The OSI model is a model that provides a common basis for the coordination of standards development for the purpose of systems interconnection. In the OSI reference model, the communications between computing systems are split into seven different abstraction layers: physical, data link, network, transport, session, presentation, and application layers. Each layer serves a set of functionalities to the layer above it and is served by the layer below it. The OSI layer 1 (physical layer) is responsible for transmission and reception of raw bits over a physical medium. The OSI layer 2 (data link layer) supports transmission of data frames between two nodes connected by a physical layer. The OSI layer 3 (network layer) provides structing and managing a multi-node network including addressing, routing, and traffic control. The OSI layer 4 (transport layer) provides reliable transmission of data segments between points on a network including segmentation, acknowledgement, and multiplexing. The OSI layer 5 (session layer) manages communication sessions, i.e., continuous exchange of information in the form of multiple back-and-forth transmissions between two nodes.

The NCE 110 is configured to provide a connection between an end point (EP) (e.g., the OS or the platform engines 120a-120n) and a network interface (i.e., NICs 130a-130m). The NCE 110 may support a number of clients (endpoints (EPs)) through dedicated glue logics (EP glue logics 114a-114k). A glue logic is a logic circuitry used to interface with another integrated circuit (IC). The NCE 110 includes one or more EP glue logics 114a-114k to support one or more clients, e.g., the OS and a plurality of platform engines 120a-120n. Each EP glue logic 114a-114k is a custom logic circuitry dedicated for interfacing with a specific platform engine 120a-120n or the OS. The client supported by the NCE 110 may also be an embedded virtual machine (VM) hosted by the NCE 110.

The NCE 110 may support one or more network access technologies (i.e., NICs 130a-130m) through dedicated one or more NIC glue logic 116a-116m. The network access technologies that the NCE 110 support may be any wireless or wired networking protocols including, but not limited to, Third Generation (3G), Fourth Generation (4G), Fifth Generation (5G), Wi-Fi, Bluetooth, local area network (LAN), or the like. Each NIC glue logic 116a-116m is a custom logic circuitry dedicated for interfacing with a specific NIC 130a-130m.

The execution core 112 of the NCE 110 is configured to control network interfaces for the OS and the one or more platform engines 120a-120n. The NCE 110 provides network interfaces to the OS and the one or more platform engines 120a-120n via the EP glue logic 114a-114k and the NIC glue logic 116a-116m. The execution core 112 is configured to abstract networking details from the OS and the one or more platform engines 120a-120n. Once set up by the OS, the execution core 112 may transfer data between the one or more platform engines 120a-120n and the one or more network interface cards 130a-130m or perform other tasks such as packet inspection and monitoring, traffic management, tethering, providing proximity or ranging services, sensing, and the like without management by the OS. The execution core 112 may be configured to handover between network interfaces. For example, the execution core 112 may handover between the 3G/4G/5G interface and the WLAN interface seamlessly based on predetermined criteria or policy for a user. The NCE 110 may include a networking-oriented OS including all required networking protocol stacks for transmitting and receiving data over a network (e.g., OSI layers 2-4) and/or for services such as client telemetry, routing, local domain name system (DNS) caching, etc.

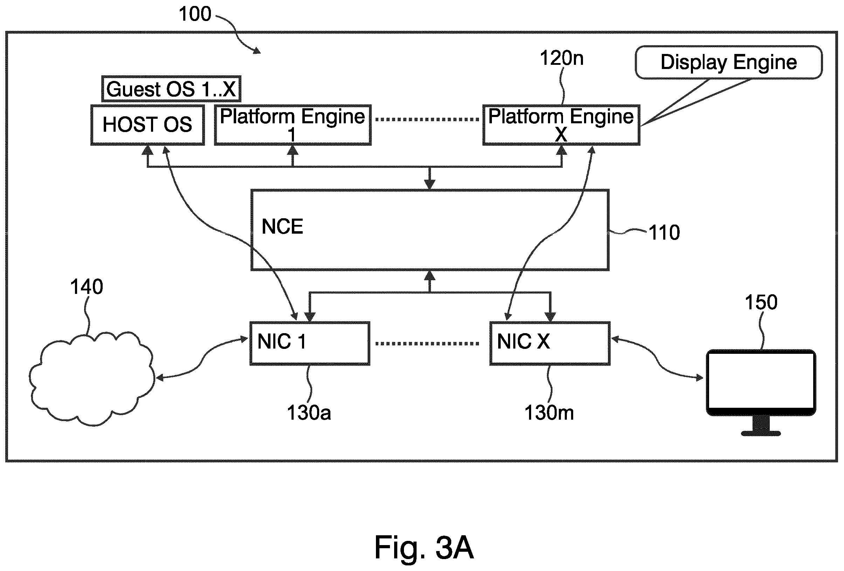

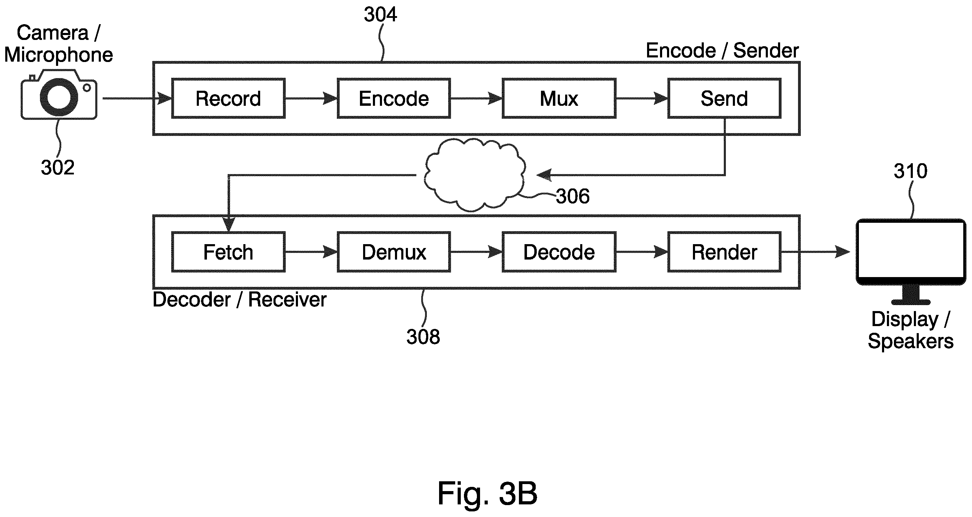

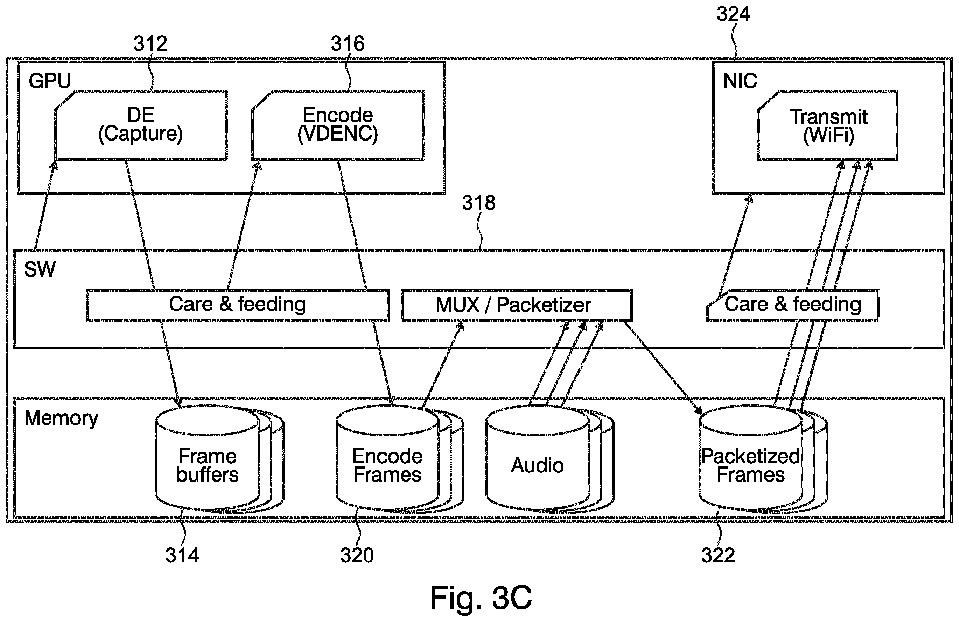

Examples of NCE-related data flows will be explained hereafter with reference to FIGS. 3-7. It should be noted that the functions/services provided by the NCE illustrated in FIGS. 3-7 are merely some examples, not a limitation, and other functions or services may also be provided by the NCE.

FIG. 3A shows an example scenario for wireless display offloading. The system 100 is included in a user equipment, such as a personal computer, a laptop computer, a tablet computer, a mobile phone, a smart phone, or the like. A user wants to display a video (e.g., for video conferencing, etc.) on a separate display device 330 (e.g., a monitor, a TV, etc.). In this example, the NCE 110 is configured to support displaying a video on a wireless monitor(s) 150 while participating in video conferencing hosted by the host (e.g., a PC). The system 100 may establish a wireless connection (either directly (e.g., a peer-to-peer connection) or via an intermediary (e.g., via an access point or another device)) with the display device 330 under the control of the OS. The OS in the host (e.g., the PC) configures the NCE 110 for the wireless display offloading. Once the connection is set up and the NCE is configured with the necessary parameters, all data transfer for the wireless video display inside the platform may be managed by the NCE 110. The system 100 receives video data from the network 140 via a NIC 130a. The received video data is then transferred to the platform engine 120n (i.e., a display engine in this example) by the NCE 110. The NCE 110 transfers data from the platform engine 120n to the display device 150 via a NIC 130m. The data transfer between the platform engine 120n and the NIC 130m for the display device 150 may be performed by the NCE 110 without management by the OS following configuration of the packet and headers templates and connection data. The OS configures the NCE 110 with frame parameters and template (e.g., 5-tuple, session keys, etc.). The 5-tuple information includes the source and destination IP addresses, the source and destination port numbers, and the protocol type. A session key is a cryptographic key used to encrypt data for a communication session. Once the NCE 110 is configured with the necessary parameters and template, the encoded data can be consumed directly from the buffers of the display engine 120n and sent as payload to the wireless display 150 via the NIC 130m.

With this scheme, the latency of per-packet processing in the OS is saved since the embedded SW/HW accelerators in the NCE 110 are more efficient for the processing. The main CPU/memory activity in the platform can also be reduced due to the offloading to the NCE. The NCE is much smaller device with less functionalities that the main CPU and the OS, which can save power consumption as well.

FIG. 3B shows an example process of video/audio transmission for playing on a display/speaker. A video/audio is captured by a device such as a camera/microphone 302 and recorded. The captured video/audio is then encoded (e.g., H.264 encoding, etc.) and multiplexed for transmission and sent by a sending device 304 over a network 306. The encoded video/audio is then received by a receiving device 308, demultiplexed, decoded, and rendered for playing back on a display/speaker 310.

FIG. 3C shows an example processing by the NCE for the wireless display offloading. The display engine (DE) 312 captures raw data into dedicated memory buffers 314. The data is then encoded by the VDENC engine 316 and stored in a buffer 320, ready to be consumed by the NCE SW318. The NCE SW 318 combines the audio & video streams and packs the data into packetized frames that are then transmitted via the NIC 324. The NCE SW 318 notifies the VDENC 316 on available buffers following completion of the transmit procedure.

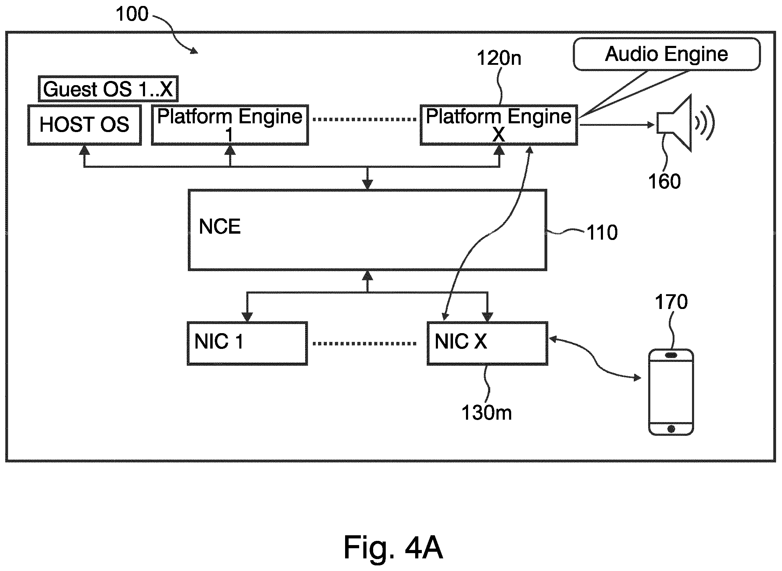

FIG. 4A shows an example scenario for audio streaming offloading. The system 100 is included in a user equipment, such as a personal computer, a laptop computer, a tablet computer, a mobile phone, a smart phone, or the like. A user wants to play audio streaming from another user equipment (alternatively from a network) on a separate speaker 160. The system 100 establishes a connection with the user equipment 170. The OS configures the NCE 110 for the audio streaming. Once the connection is set up and the NCE 110 is configured with the necessary parameters, all data transfer for the audio streaming inside the platform can be managed by the NCE 110. The NCE 110 receives audio data from the user equipment 170 (alternatively from a network) via a NIC 130m/130a. The received audio data is then forwarded to the platform engine 120n (i.e., an audio engine in this example) by the NCE 110. The audio data from the audio engine 120n may then be sent to the speaker 160. The data transfer between the audio engine 120n and the NIC 130m for the user equipment 170 (or from the network) may be performed by the NCE 110 without management by the OS following configuration of the packet and headers templates and connection data. The OS in the host configures the NCE 110 with frame parameters and template (e.g., 5-tuple, session keys, etc.). The 5-tuple information includes the source and destination IP addresses, source and destination port numbers, and protocol type. Once the NCE 110 is configured with the frame parameters and template, the encoded data received from the user equipment 170 can be directly sent to the buffers of the audio engine 120n and then to the speaker 160.

With this scheme, the latency of per-packet processing in the OS is saved since the embedded SW/HW accelerators in the NCE 110 are more efficient in performing the processing. The main CPU/memory activity in the platform can also be reduced due to the offloading to the NCE, which is much smaller device. This can save power consumption as well.

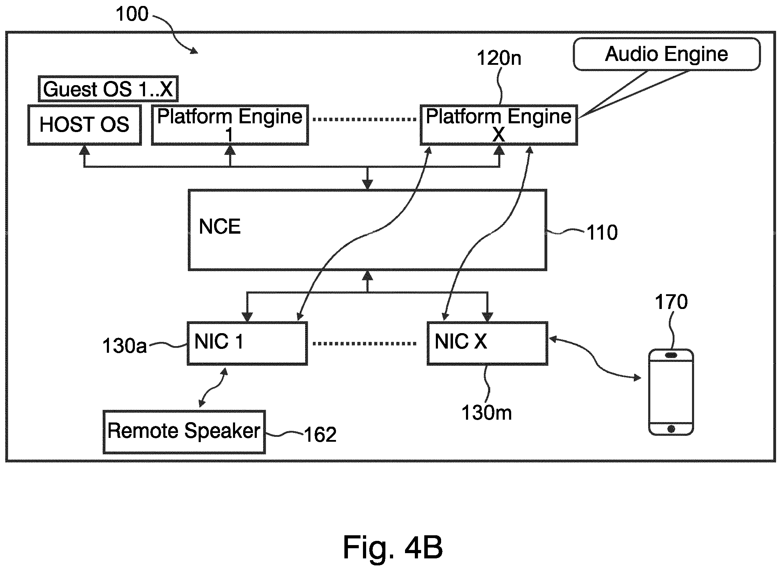

FIG. 4B shows an example for audio streaming offloading to a remote wireless speaker 162. The system 100 establishes a connection with the user equipment 170 and also with a wireless remote speaker 162. The OS configures the NCE 110 for the audio streaming. The OS configures the NCE 110 with frame parameters and template (e.g., 5-tuple, session keys, etc.). Once the connection is set up and the NCE is configured with the necessary parameters, all data transfer for the audio streaming inside the platform is managed by the NCE 110. The NCE 110 receives audio data from the user equipment 170 (alternatively from a network) via a NIC 130m. The received audio data is then forwarded to the platform engine 120n (i.e., an audio engine in this example) by the NCE 110. With the NCE 110 being configured with the frame parameters and template, etc., the encoded data can be consumed directly from the buffers of the audio engine 120n and sent as payload to the remote wireless speaker 162 via a NIC 130a.

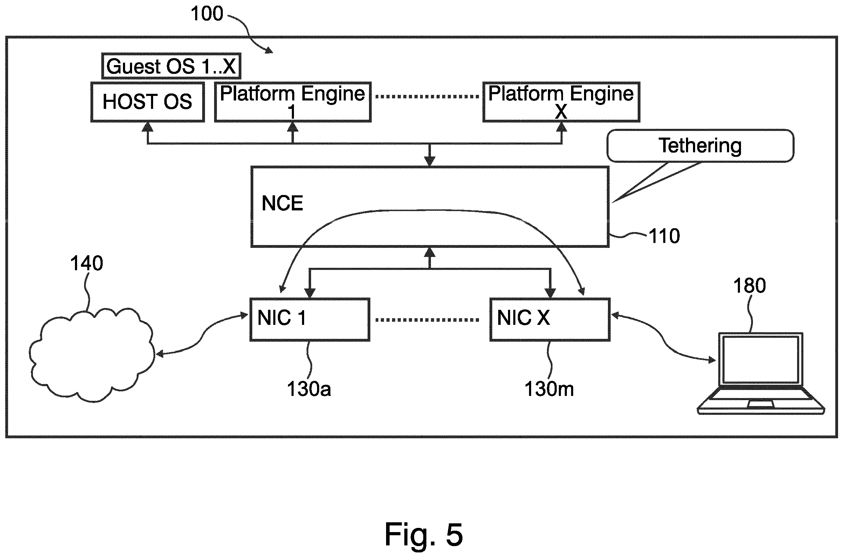

FIG. 5 shows an example scenario for tethering. The NCE 110 is configured to support tethering for another user equipment. Tethering is a technique of using a device (e.g., a smartphone) as a modem to connect another device (e.g., a laptop or another mobile phone) to the Internet. Tethering is a method of creating a mobile hotspot (an ad hoc wireless access point). The system 100 is included in a user equipment, such as a personal computer, a laptop computer, a tablet computer, a mobile phone, a smart phone, or the like. A user wants to implement tethering for another user equipment 180. The system 100 establishes a connection with a network 140 and a connection with the user equipment 180, respectively. The OS configures the NCE 110 for tethering. Once set up by the OS, all data transfer for the tethering inside the platform is managed by the NCE 110. The NCE 110 transfers data packets between the network 140 and the user equipment 180 via NICs 130a, 130m. The data packets may be forwarded between the NICs 130a and 130m by the NCE 110 without management by the OS.

The OS configures the NCE 110 with peer routing parameters (e.g., 5-tuple). Once the NCE is configured by the OS, the received data can be transferred by the NCE 110 to the destination peer directly within the platform without the involvement of the OS. With this scheme, the latency of per-packet processing in the OS is saved since the embedded SW/HW accelerators in the NCE 110 can perform the processing more efficiently. The main CPU/memory activity in the platform can also be reduced due to the offloading such tasks to the NCE, which is much smaller device. This can save power consumption as well.

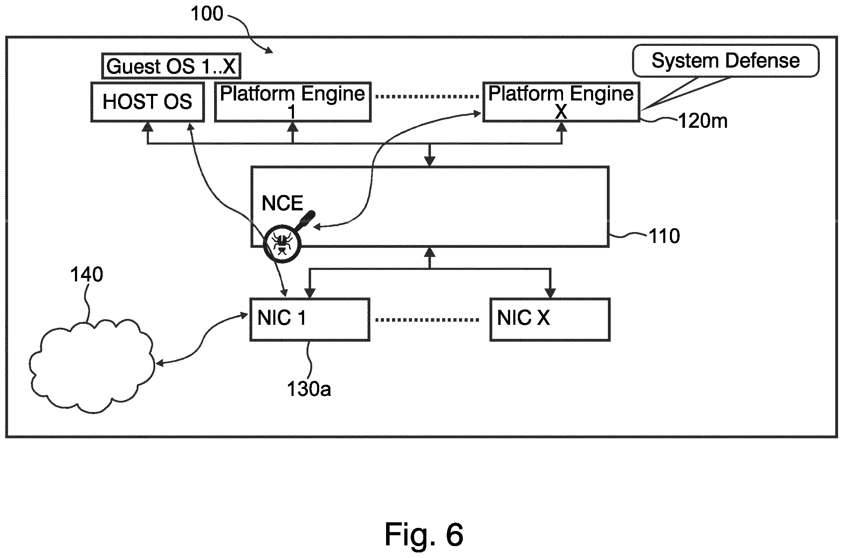

FIG. 6 shows an example scenario that the NCE is configured to perform traffic monitoring. The NCE 110 controls network interfaces for the OS and the platform engines 120a-120n while abstracting the networking details. Data packets received from the network 140 are transferred by the NCE 110 to the OS or the platform engine 120m. The execution core 112 of the NCE 110 may be configured to inspect the data packets and monitor certain activities on the data traffic. The NCE 110 may inspect in detail the data packets being sent over a network and may take appropriate actions such as alerting, blocking, re-routing, logging it, or the like. The security agent in the platform configures the NCE 110 with frame filters and associated actions triggers. A system defense policy contains a set of filters that are applied to the incoming and outgoing network packets, along with the conditions to be applied in the filter. The NCE 110 performs per-packet inspection based on the configured filters and may drop, copy, or reroute the frames.

The main CPU/memory activity in the platform can also be reduced due to the offloading the task to the NCE, which is much smaller device. This can save power consumption as well. In this example, security may not be dependent on the OS, which results in reduced attack surface and increased robustness.

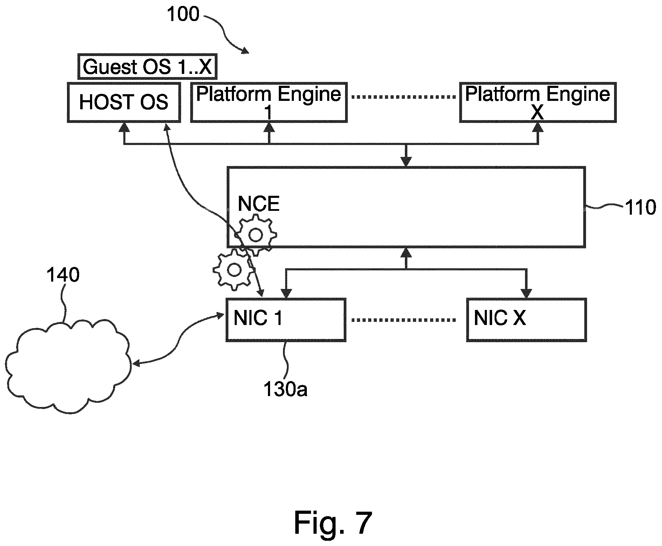

FIG. 7 shows an example scenario that the NCE is configured to perform traffic management. Data packets received from, and to be transmitted to, the network 140 may be managed by the NCE 110. The NCE 110 (the execution core 112) may be configured to perform traffic management. For example, the NCE 110 may classify the packets for identifying the priority of each packet and mark accordingly, and handle the packets based on the identified priorities. Classification and marking may be performed in the process of identifying the priority of each packet. The NCE 110 may perform appropriate actions on the packets based on quality of service (QoS) policy and traffic shaping mechanism. The NCE 110 may check the data traffic in real time and take an immediate action according to the setting.

The network services provider may configure the NCE 110 with traffic shaping policy which allows for real-time implementation of QoS and routing logic, or the like. QoS policing and traffic shaping mechanisms check traffic in real time and take immediate actions according to the setting.

With this scheme, the latency of per-packet processing in the OS is saved since the embedded SW/HW accelerators in the NCE 110 can perform the processing more efficiently. The main CPU/memory activity in the platform can also be reduced due to the offloading the task to the NCE 110, which is a much smaller device. This can save power consumption as well.

The examples disclosed herein provide numerous advantages for an improved wireless experience. Seamless network access may be possible always and anywhere. Seamless handover between network interfaces is also possible. Data flows and platform activities are optimized for power and latency. Secure, reliable network connectivity and micro services are possible with reduced OS dependency. Traffic management may be performed more efficiently, enabling policy-based wireless network slicing.

The NCE 110 may also provide additional functionalities. For example, the NCE 110 may provide proximity services to the service requestors/clients. A proximity service uses a proximity sensor to provide numerous services, such as discovering devices in physical proximity and enabling an optimized communication of the devices, etc. Direct communication between the devices may be facilitated with or without supervision from the network. Proximity services may become available once a device enters a specific area or comes near another device. The NCE 110 may provide proximity services, e.g., based on Bluetooth or Wi-Fi received signal strength indicator (RSSI). An indoor positioning system (IPS) may be used to locate objects in an indoor environment. The IPS may estimate the location of objects, e.g., using an RSSI through wireless networks. The IPS may determine the position of wireless devices, e.g., in a room. For example, the RSSI values on the reference point may be measured, and the position of the wireless devices may be estimated from the reference points using trilateration method and the indoor path loss model.

The NCE 110 may also provide service discovery using Wi-Fi, Bluetooth, or the like. For example, Wi-Fi or Ultra-wideband (UWB) may be used to measure the accurate distance between two devices using time of flight. Using Wi-Fi, etc., the services of nearby devices can be discovered directly, without being connected to a network. These capabilities help communicating between apps, even when no local network or hotspot is available.

The NCE 110 may also provide Wi-Fi sensing services. Wi-Fi sensing is a technology that enables motion detection, gesture recognition, biometric measurement, or the like by using existing Wi-Fi signals. Wi-Fi sensing uses existing Wi-Fi signals to detect events or changes such as motion, human proximity presence, etc.

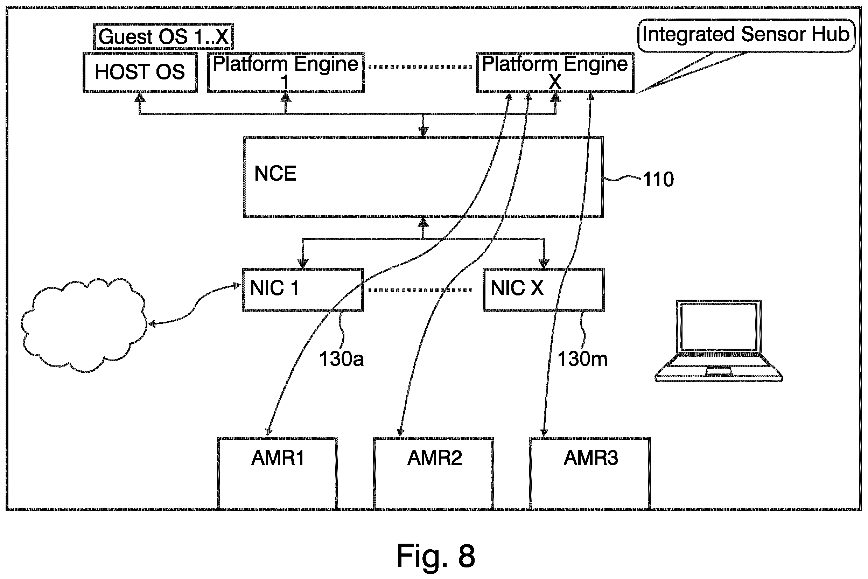

FIG. 8 shows an example scenario that the platform includes a sensor hub 190. A sensor hub 190 may be included in the system/platform. A sensor hub is a microcontroller unit, a co-processor, or a digital signal processor (DSP) set that helps to integrate data from different sensors (e.g., anisotropic magneto-resistive (AMR) sensors) and process them. The sensor hub can help off-loading these jobs from the main central processing unit/core to a dedicated low power co-processor, thus saving battery consumption and providing a performance improvement.

In some example platforms, NICs 130a-130m may be configured to provide contextual information to the platform (e.g., location information based on RSSI measurements of external Bluetooth (BT), Wi-Fi, or other beacons; high accuracy ranging information using BT high-accuracy distance measurement (HADM), Wi-Fi fine time measurements based on IEEE802.11REVmc, IEEE802.11az, or IEEE802.11bk, and/or UWB ranging; channel sounding-based environmental sensing using BT, Wi-Fi, and/or UWB, etc.). In these platforms, the NCE 110 may be configured to interact between the sensor hub 190 and the NICS 130a-130m. The NCE 110 (i.e., the execution core (112)) may be configured to provide the contextual information to clients on the platform. Example NCE 110 responsibilities could be to select a NIC 130a-130m for a required operation, perform NIC device state management, and/or configure the relevant one or more NICs 130a-130m to execute the required operation (e.g., sensing activities). Once configured by the OS, the NCE 110 may receive sensing data (contextual information) from the NICs 130a-130m and transfer the sensing data to a client on the platform, such as the sensor hub 190, without management by the OS.

For all of these activities, the NICs 130a-130m have to be active, either in a listening-only mode or in some cases in a transmit/receive mode. As a result, it may not be enough for the NCE 110 just to present a "networking device" to the operating system and other clients. Therefore, in some examples, the NCE 110 may be provided with a set of capabilities of the platform, and the capabilities may be managed in a way that can still provide the offload value of the NCE.

In order to support these, in some examples, the NCE 110 may be provided with additional (non-networking-related) functionalities. For example, the NCE 110 may be configured to perform NIC power state management, and schedule non-networking-related activities based on the aggregate networking and non-networking requests from the host OS and guest OSs on the device, as well as potentially from other device engines (e.g., the sensor or context hub if present). Networking-related functionalities are such NIC activities that are operative to deliver data to or from the platform to other (external) platforms using NIC capabilities, whereas non-networking-related functionalities could be ranging, sensing, etc., that are not designed to communicate between two different devices.

In this case, the NCE 110 may present to the different potential clients (operating systems, other compute engines, etc.) a set of supported capabilities (including both networking-related and non-networking-related functionalities/services) through APIs. Once clients register for a specific service, the NCE 110 may cause the relevant NICs 130a-130m to execute the required functionalities, and deliver the required outputs (data, measurements, etc.) to the different service requesters (clients).

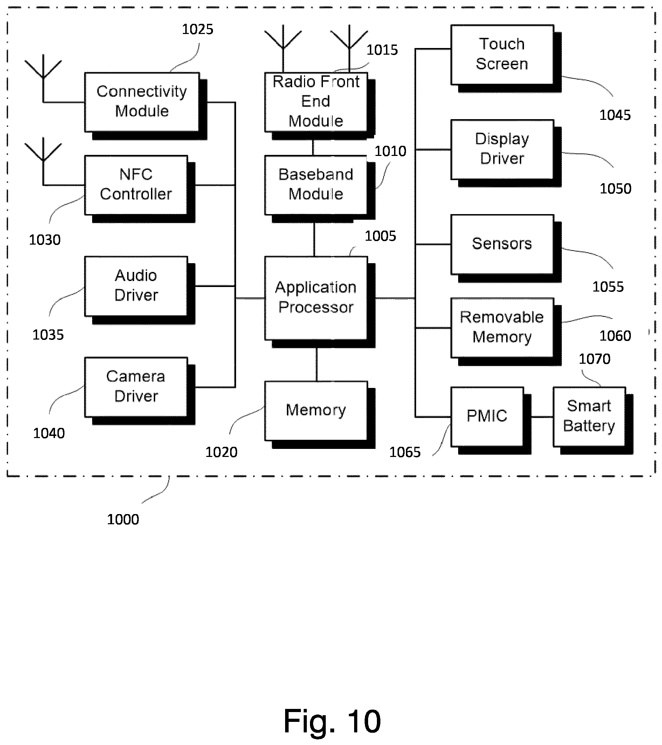

FIG. 10 illustrates a user device 1000 in which the examples disclosed herein may be implemented. For example, the examples disclosed herein may be implemented in the radio front-end module 1015, in the baseband module 1010, etc. The user device 1000 may be a mobile device in some aspects and includes an application processor 1005, baseband processor 1010 (also referred to as a baseband module), radio front end module (RFEM) 1015, memory 1020, connectivity module 1025, near field communication (NFC) controller 1030, audio driver 1035, camera driver 1040, touch screen 1045, display driver 1050, sensors 1055, removable memory 1060, power management integrated circuit (PMIC) 1065 and smart battery 1070.

In some aspects, application processor 1005 may include, for example, one or more CPU cores and one or more of cache memory, low drop-out voltage regulators (LDOs), interrupt controllers, serial interfaces such as serial peripheral interface (SPI), inter-integrated circuit (I2C) or universal programmable serial interface module, real time clock (RTC), timer-counters including interval and watchdog timers, general purpose input-output (IO), memory card controllers such as secure digital / multi-media card (SD/MMC) or similar, universal serial bus (USB) interfaces, mobile industry processor interface (MIPI) interfaces and Joint Test Access Group (JTAG) test access ports.

In some aspects, baseband module 1010 may be implemented, for example, as a solder-down substrate including one or more integrated circuits, a single packaged integrated circuit soldered to a main circuit board, and/or a multi-chip module containing two or more integrated circuits.

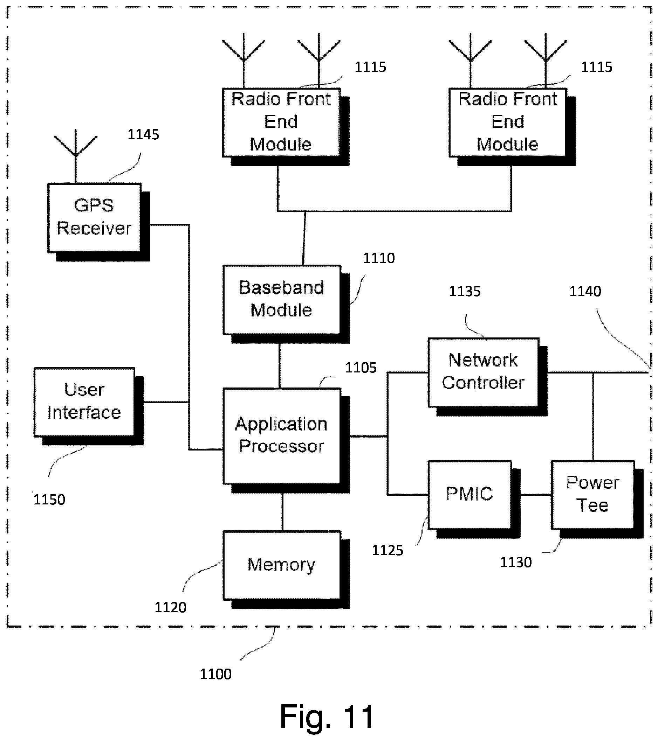

FIG. 11 illustrates a base station or infrastructure equipment radio head 1100 in which the examples disclosed herein may be implemented. For example, the examples disclosed herein may be implemented in the radio front-end module 1115, in the baseband module 1110, etc. The base station radio head 1100 may include one or more of application processor 1105, baseband modules 1110, one or more radio front end modules 1115, memory 1120, power management circuitry 1125, power tee circuitry 1130, network controller 1135, network interface connector 1140, satellite navigation receiver module 1145, and user interface 1150.

In some aspects, application processor 1105 may include one or more CPU cores and one or more of cache memory, low drop-out voltage regulators (LDOs), interrupt controllers, serial interfaces such as SPI, I2C or universal programmable serial interface module, real time clock (RTC), timer-counters including interval and watchdog timers, general purpose IO, memory card controllers such as SD/MMC or similar, USB interfaces, MIPI interfaces and Joint Test Access Group (JTAG) test access ports.

In some aspects, baseband processor 1110 may be implemented, for example, as a solder-down substrate including one or more integrated circuits, a single packaged integrated circuit soldered to a main circuit board or a multi-chip module containing two or more integrated circuits.

In some aspects, memory 1120 may include one or more of volatile memory including dynamic random access memory (DRAM) and/or synchronous dynamic random access memory (SDRAM), and nonvolatile memory (NVM) including high-speed electrically erasable memory (commonly referred to as Flash memory), phase change random access memory (PRAM), magneto resistive random access memory (MRAM) and/or a three-dimensional crosspoint memory. Memory 1120 may be implemented as one or more of solder down packaged integrated circuits, socketed memory modules and plug-in memory cards.

In some aspects, power management integrated circuitry 1125 may include one or more of voltage regulators, surge protectors, power alarm detection circuitry and one or more backup power sources such as a battery or capacitor. Power alarm detection circuitry may detect one or more of brown out (under-voltage) and surge (over-voltage) conditions.

In some aspects, power tee circuitry 1130 may provide for electrical power drawn from a network cable to provide both power supply and data connectivity to the base station radio head 1100 using a single cable.

In some aspects, network controller 1135 may provide connectivity to a network using a standard network interface protocol such as Ethernet. Network connectivity may be provided using a physical connection which is one of electrical (commonly referred to as copper interconnect), optical or wireless.

In some aspects, satellite navigation receiver module 1145 may include circuitry to receive and decode signals transmitted by one or more navigation satellite constellations such as the global positioning system (GPS), Globalnaya Navigatsionnaya Sputnikovaya Sistema (GLONASS), Galileo and/or BeiDou. The receiver 1145 may provide data to application processor 1105 which may include one or more of position data or time data. Application processor 1105 may use time data to synchronize operations with other radio base stations.

In some aspects, user interface 1150 may include one or more of physical or virtual buttons, such as a reset button, one or more indicators such as light emitting diodes (LEDs) and a display screen.

Another example is a computer program having a program code for performing at least one of the methods described herein, when the computer program is executed on a computer, a processor, or a programmable hardware component. Another example is a machine-readable storage including machine readable instructions, when executed, to implement a method or realize an apparatus as described herein. A further example is a machine-readable medium including code, when executed, to cause a machine to perform any of the methods described herein.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, said claims defining the scope of the invention.

## Claims

1. A networking control engine, NCE, (110) included in a platform as a hardware module for network connectivity and data transfer control and management, the platform further including a main processing core for running an operating system, one or more platform engines, and one or more network interface cards, the NCE (110) comprising:
one or more end point glue logic (114a-114k), each end point glue logic (114a-114k) being a dedicated custom logic circuitry configured to specifically interface with one of the platform engines (120a-120n) or the operating system;
an execution core (112) comprising a processing unit and a hardware accelerator for packet processing and network protocol stack processing; and
one or more network interface card glue logic (116a-116m), each network interface card glue logic (116a-116m) being a dedicated custom logic circuitry configured to specifically interface with one of the network interface cards (130a-130m),
wherein the execution core (112) is configured to control network interfaces for the operating system and the platform engines (120a-120n) and control data connectivity and data transfer among the operating system, the one or more platform engines (120a-120n), and the network interface cards (130a-130m).

2. The NCE of claim 1, wherein the execution core (112) is configured to provide contextual information to the operating system or the one or more platform engines on the platform.

3. The NCE of claim 2, wherein the contextual information includes location information based on received signal strength measurements, high accuracy ranging information, and/or channel sounding-based environmental sensing information.

4. The NCE as in any one of claims 1-3, wherein the execution core (112) is configured to select a network interface card among a plurality of network interface cards for a required operation, perform network interface card power state management, and/or configure a network interface card to execute required activities.

5. The NCE as in any one of claims 1-4, wherein the execution core (112) is configured to schedule activities based on aggregate requests from a host operating system, guest operating systems on the platform, and/or the platform engines (120a-120n).

6. The NCE of claim 1-5, wherein the execution core (112) is configured to transfer data between the one or more platform engines (120a-120n) and the one or more network interface cards (130a-130m) without management by the operating system.

7. The NCE as in any one of claims 1-6, wherein the execution core (112) is configured to abstract networking details from the operating system and the one or more platform engines (120a-120n).

8. The NCE as in any one of claims 1-7, wherein the execution core (112) is configured to handover between the network interfaces based on predetermined criteria.

9. The NCE as in any one of claims 1-8, wherein the execution core (112) includes a networking-oriented operating system including all required networking protocol stack for transmitting and receiving data over a network.

10. The NCE as in any one of claims 1-9, wherein the execution core (112) is configured to transfer video data and/or audio data between a platform engine and a network interface card without management by the operating system.

11. The NCE as in any one of claims 1-10, wherein the execution core (112) is configured to transfer data packets between two network interface cards for tethering without management by the operating system.

12. The NCE as in any one of claims 1-11, wherein the execution core (112) is configured to inspect packets transferred between the end point glue logic and the network interface card glue logic and monitor certain activities on a packet flow.

13. The NCE as in any one of claims 1-12, wherein the execution core (112) is configured to perform packet classification on packets and perform actions based on the packet classification.

14. The NCE as in any one of claims 1-13, wherein the execution core (112) includes network connectivity and data transfer control and management capabilities.

15. A system comprising the NCE as in any one of claims 1-14.

## Patentansprüche

1. Netzwerksteuerungsmaschine (NCE) (110), die in einer Plattform als ein Hardwaremodul für Netzwerkkonnektivität und Datentransfersteuerung und - verwaltung enthalten ist, wobei die Plattform ferner einen Hauptverarbeitungskern zum Ausführen eines Betriebssystems, eine oder mehrere Plattformmaschinen und eine oder mehrere Netzwerkkarten beinhaltet, wobei die NCE (110) Folgendes umfasst:
eine oder mehrere Endpunkt-Kleberlogiken (114a-114k), wobei jede Endpunkt-Kleberlogik (114a-114k) eine dedizierte kundenspezifische Logikschaltung ist, die dazu ausgelegt ist, spezifisch mit einer der Plattformmaschinen (120a-120n) oder dem Betriebssystem zu verbinden;
einen Ausführungskern (112), der eine Verarbeitungseinheit und einen Hardwarebeschleuniger zur Paketverarbeitung und Netzwerkprotokollstapelverarbeitung umfasst; und
eine oder mehrere Netzwerkkarten-Kleberlogiken (116a-116m), wobei jede Netzwerkkarten-Kleberlogik (116a-116m) eine dedizierte kundenspezifische Logikschaltung ist, die dazu ausgelegt ist, sich spezifisch mit einer der Netzwerkkarten (130a-130m) zu verbinden,
wobei der Ausführungskern (112) dazu ausgelegt ist, Netzwerkschnittstellen für das Betriebssystem und die Plattformmaschinen (120a-120n) zu steuern und Datenkonnektivität und Datenübertragung zwischen dem Betriebssystem, der einen oder den mehreren Plattformmaschinen (120a-120n) und den Netzwerkkarten (130a-130m) zu steuern.

2. NCE nach Anspruch 1, wobei der Ausführungskern (112) dazu ausgelegt ist, dem Betriebssystem oder der einen oder den mehreren Plattformmaschinen auf der Plattform Kontextinformationen bereitzustellen.

3. NCE nach Anspruch 2, wobei die Kontextinformationen Standortinformationen beinhalten, die auf empfangenen Signalstärkemessungen, hochgenauen Entfernungsinformationen und/oder auf Kanalsondierungen basierenden Umgebungserfassungsinformationen basieren.

4. NCE nach einem der Ansprüche 1-3, wobei der Ausführungskern (112) dazu ausgelegt ist, eine Netzwerkkarte unter einer Vielzahl von Netzwerkkarten für eine erforderliche Operation auszuwählen, eine Netzwerkkarten-Leistungszustandsverwaltung durchzuführen und/oder eine Netzwerkkarte zu konfigurieren, um erforderliche Aktivitäten auszuführen.

5. NCE nach einem der Ansprüche 1-4, wobei der Ausführungskern (112) dazu ausgelegt ist, Aktivitäten basierend auf aggregierten Anfragen von einem Host-Betriebssystem, Gast-Betriebssystemen auf der Plattform und/oder den Plattformmaschinen (120a-120n) zu planen.

6. NCE nach Anspruch 1-5, wobei der Ausführungskern (112) dazu ausgelegt ist, Daten zwischen der einen oder den mehreren Plattformmaschinen (120a-120n) und der einen oder den mehreren Netzwerkkarten (130a-130m) ohne Verwaltung durch das Betriebssystem zu übertragen.

7. NCE nach einem der Ansprüche 1-6, wobei der Ausführungskern (112) dazu ausgelegt ist, Netzwerkdetails von dem Betriebssystem und der einen oder den mehreren Plattformmaschinen (120a-120n) zu abstrahieren.

8. NCE nach einem der Ansprüche 1-7, wobei der Ausführungskern (112) dazu ausgelegt ist, einen Handover zwischen den Netzwerkschnittstellen basierend auf vorbestimmten Kriterien durchzuführen.

9. NCE nach einem der Ansprüche 1-8, wobei der Ausführungskern (112) ein netzwerkorientiertes Betriebssystem beinhaltet, das alle erforderlichen Netzwerkprotokollstapel zum Senden und Empfangen von Daten über ein Netzwerk beinhaltet.

10. NCE nach einem der Ansprüche 1-9, wobei der Ausführungskern (112) dazu ausgelegt ist, Videodaten und/oder Audiodaten zwischen einer Plattformmaschine und einer Netzwerkkarte ohne Verwaltung durch das Betriebssystem zu übertragen.

11. NCE nach einem der Ansprüche 1-10, wobei der Ausführungskern (112) dazu ausgelegt ist, Datenpakete zwischen zwei Netzwerkkarten zum Tethering ohne Verwaltung durch das Betriebssystem zu übertragen.

12. NCE nach einem der Ansprüche 1-11, wobei der Ausführungskern (112) dazu ausgelegt ist, Pakete zu inspizieren, die zwischen der Endpunkt-Kleberlogik und der Netzwerkkarten-Kleberlogik übertragen werden, und bestimmte Aktivitäten auf einem Paketfluss zu überwachen.

13. NCE nach einem der Ansprüche 1-12, wobei der Ausführungskern (112) dazu ausgelegt ist, eine Paketklassifizierung an Paketen durchzuführen und Aktionen basierend auf der Paketklassifizierung durchzuführen.

14. NCE nach einem der Ansprüche 1-13, wobei der Ausführungskern (112) Netzwerkkonnektivität und Datenübertragungssteuerungs- und -verwaltungsfähigkeiten beinhaltet.

15. System, das die NCE nach einem der Ansprüche 1-14 umfasst.

## Revendications

1. Moteur de contrôle de réseau, NCE, (110) compris dans une plateforme en tant que module matériel pour une commande et gestion de connectivité réseau et de transfert de données, la plateforme comportant en outre un cœur de traitement principal pour faire fonctionner un système d'exploitation, un ou plusieurs moteurs de plateforme, et une ou plusieurs cartes d'interface réseau, le NCE (110) comprenant :
une ou plusieurs circuits logiques de liaison de point d'extrémité (114a-114k), chaque circuit logique de liaison de point d'extrémité (114a-114k) étant une circuiterie logique personnalisée dédiée configurée pour spécifiquement faire l'interface avec l'un des moteurs de plateforme (120a-120n) ou le système d'exploitation ; un noyau d'exécution (112) comprenant une unité de traitement et un accélérateur matériel pour un traitement de paquets et un traitement de piles de protocoles réseau ; et
un ou plusieurs circuits logiques de liaison de carte d'interface réseau (116a-116m), chaque circuit logique de liaison de carte d'interface réseau (116a-116m) étant une circuiterie logique personnalisée dédiée configurée pour spécifiquement faire l'interface avec une des cartes d'interface réseau (130a-130m),
le noyau d'exécution (112) étant configuré pour commander des interfaces réseau pour le système d'exploitation et les moteurs de plateforme (120a-120n) et commander une connectivité de données et un transfert de données parmi le système d'exploitation, les un ou plusieurs moteurs de plateforme (120a-120n) et les cartes d'interface réseau (130a-130m).

2. NCE selon la revendication 1, le noyau d'exécution (112) étant configuré pour fournir des informations contextuelles au système d'exploitation ou aux un ou plusieurs moteurs de plateforme sur la plateforme.

3. NCE selon la revendication 2, les informations contextuelles comportant des informations d'emplacement basées sur des mesures d'intensité de signal reçu, des informations de télémétrie de haute précision et/ou des informations de détection environnementale basées sur le sondage de canal.

4. NCE selon l'une quelconque des revendications 1 à 3, le noyau d'exécution (112) étant configuré pour sélectionner une carte d'interface réseau parmi une pluralité de cartes d'interface réseau pour une opération requise, effectuer une gestion d'état d'alimentation de carte d'interface réseau, et/ou configurer une carte d'interface réseau pour exécuter des activités requises.

5. NCE selon l'une quelconque des revendications 1 à 4, le noyau d'exécution (112) étant configuré pour programmer des activités sur la base de demandes agrégées provenant d'un système d'exploitation hôte, de systèmes d'exploitation invités sur la plateforme et/ou des moteurs de plateforme (120a-120n).

6. NCE selon les revendications 1 à 5, le noyau d'exécution (112) étant configuré pour transférer des données entre les un ou plusieurs moteurs de plateforme (120a à 120n) et les une ou plusieurs cartes d'interface réseau (130a à 130m) sans gestion par le système d'exploitation.

7. NCE selon l'une quelconque des revendications 1 à 6, le noyau d'exécution (112) étant configuré pour faire abstraction de détails de mise en réseau du système d'exploitation et des un ou plusieurs moteurs de plateforme (120a-120n).

8. NCE selon l'une quelconque des revendications 1 à 7, le noyau d'exécution (112) étant configuré pour effectuer un transfert intercellulaire entre les interfaces réseau sur la base de critères prédéterminés.

9. NCE selon l'une quelconque des revendications 1 à 8, le noyau d'exécution (112) comportant un système d'exploitation orienté réseau comportant une intégralité de pile de protocoles réseau requise pour transmettre et recevoir des données sur un réseau.

10. NCE selon l'une quelconque des revendications 1 à 9, le noyau d'exécution (112) étant configuré pour transférer des données vidéo et/ou des données audio entre un moteur de plateforme et une carte d'interface réseau sans gestion par le système d'exploitation.

11. NCE selon l'une quelconque des revendications 1 à 10, le noyau d'exécution (112) étant configuré pour transférer des paquets de données entre deux cartes d'interface réseau pour le partage de connexion sans gestion par le système d'exploitation.

12. NCE selon l'une quelconque des revendications 1 à 11, le noyau d'exécution (112) étant configuré pour inspecter des paquets transférés entre le circuit logique de liaison de point d'extrémité et le circuit logique de liaison de carte d'interface réseau et surveiller certaines activités sur un flux de paquets.

13. NCE selon l'une quelconque des revendications 1 à 12, le noyau d'exécution (112) étant configuré pour effectuer une classification de paquets sur des paquets et effectuer des actions sur la base de la classification de paquets.

14. NCE selon l'une quelconque des revendications 1 à 13, le noyau d'exécution (112) comportant des capacités de commande et de gestion de connectivité de réseau et de transfert de données.

15. Système comprenant le NCE selon l'une quelconque des revendications 1 à 14.
